# EUROPEAN PATENT APPLICATION

(11) **EP 1 583 261 A1**
(43) Date of publication of application: **05.10.2005**
(21) Application number: 05270007.7
(22) Date of filing: 01.04.2005
(51) Int. Cl.: H04B 10/158, H04B 10/12, H01Q 3/26, H01Q 21/00, H01L 27/14, H01L 31/00

(54) **Multi-input optoelectronic receivers**

(30) Priority: 02.04.2004 GB 0407568
(71) Applicant: BAE Systems PLC, London SW1Y 5AD (GB)
(72) Inventor: Flint, Ian Thomas, Luton, Bedfordshire LUi 3PG (GB); Pescod, Christopher Ralph, BAE Systems, Great Baddow, Essex CM2 8HN (GB); Green, Nicholas Peter, Luton, Bedfordshire LU1 3PG (GB); Niman, Murray Jerel, BAE Systems, Great Baddow, Essex CM2 8HN (GB)

(57) **Abstract**

Described herein is a multi-input receiver (MIR) arrangement that comprises a photodiode array (210) and coherent summing means (240). The photodiode array (210) receives optical signals having RF information impressed thereon and includes a plurality of photosensitive elements (220) and a plurality of electrical contacts (230). The coherent summing means (240) sums the RF information to provide an RF output signal in a way that the signal from each photosensitive element (220) adds vectorially in phase. The coherent summing means (240) comprises a coplanar transmission line (240) formed on a substrate (250), the impedance of the coplanar transmission line (240) being matched to the photodiode array (210) by adjusting parameters of the coplanar transmission line (240).

## Description

The present invention relates to multi-input receivers and is more particularly, although not exclusively, concerned with radio frequency (RF) receivers.

RF signals, received at a phased antenna array, are commonly transmitted over optical fibre from the antenna array to a processing module so that analogue information in the signals can be extracted. However, arrangements for transferring the signals from the optical fibre to the processing module can be complex and take up large amounts of space. This is a problem when space is an issue.

US-A-5 404 006 discloses an optical receiver arrangement in which one optical signal is distributed to a plurality of photodiodes to reduce the incident power on each photodiode. The electrical output from each of the plurality of photodiodes is then summed to provide a final output electrical signal.

US-A-5 001 336 discloses a device for producing an electronic output signal having a magnitude corresponding to the sum of the intensities of a plurality of input signals. A plurality of photo-detector elements is connected in parallel between a pair of conductor lines for receiving input signals. A high pass filter is positioned between the conductor lines and a pair of output terminals to effect summing of the output electrical signals from the photo-detector elements. Frequency compensation and/or impedance matching is provided by connecting a suitable device positioned between the high pass filter and the output terminals. However, in this device the positioning of the photo-detector elements effect the impedance of the conductor lines.

In accordance with one aspect of the present invention, there is provided a multi-input receiver arrangement comprising:-
a photodiode array for receiving optical signals having RF information impressed thereon, the array including a plurality of photosensitive elements and a plurality of electrical contacts; and
coherent summing means for summing the RF information to provide an RF output signal, the coherent summing means being such that the signal from each photosensitive element adds vectorially in phase.

In this manner, the present invention combines more than one optical signal source and implements the impedance matching for each photosensitive element in such a way so that when they are joined to a transmission line they have substantially less effect on the transmission line. Hence, the present invention produces a more uniform response and a more efficient coupling to the transmission line.

Advantageously, the coherent summing means comprises a coplanar transmission line formed on a substrate, the impedance of the coplanar transmission line being matched to the photodiode array by adjusting parameters of the coplanar transmission line.

Preferably, the substrate of the coplanar transmission line includes a plurality of solder bumps that make contact with electrical contacts of the photodiode array, the height of the solder bumps being selected to control the impedance of the photosensitive elements.

The arrangement of the present invention may comprise discrete components, hybrid components or a single monolithic component.

The optical signals may be analogue signals.

In accordance with another aspect of the present invention, there is provided an RF circuit comprising:-
an antenna array for receiving RF signals;
conversion means for converting the received RF signals to optical signals having RF information impressed thereon; and
a multi-input receiver arrangement as described above.

Preferably, the RF circuit further comprises beam forming means for forming a plurality of beams from the optical signals.

The RF signals may be analogue signals.

For a better understanding of the present invention, reference will now be made, by way of example only, to the accompanying drawings in which:
Figure 1 illustrates a block diagram of one embodiment of a receiver arrangement in accordance with the present invention;
Figure 2 illustrates an exploded view of a photodiode array in accordance with the present invention;
Figure 3 illustrates an assembled view of the Figure 2 photodiode array;
Figure 4 illustrates a block diagram of another embodiment of a receiver arrangement in accordance with the present invention; and
Figure 5 is an enlarged view of a coplanar transmission line in the region of the photodiode array shown in Figures 2 and 3.

The present invention provides a convenient way of recovering radio frequency (RF) amplitude and phase information from each element in a phased antenna array and combining that information into a single RF output. This single RF output is consistent with a beam of radiation received at a phased antenna array. A device that performs this recovery function is known as a Multi Input Receiver (MIR).

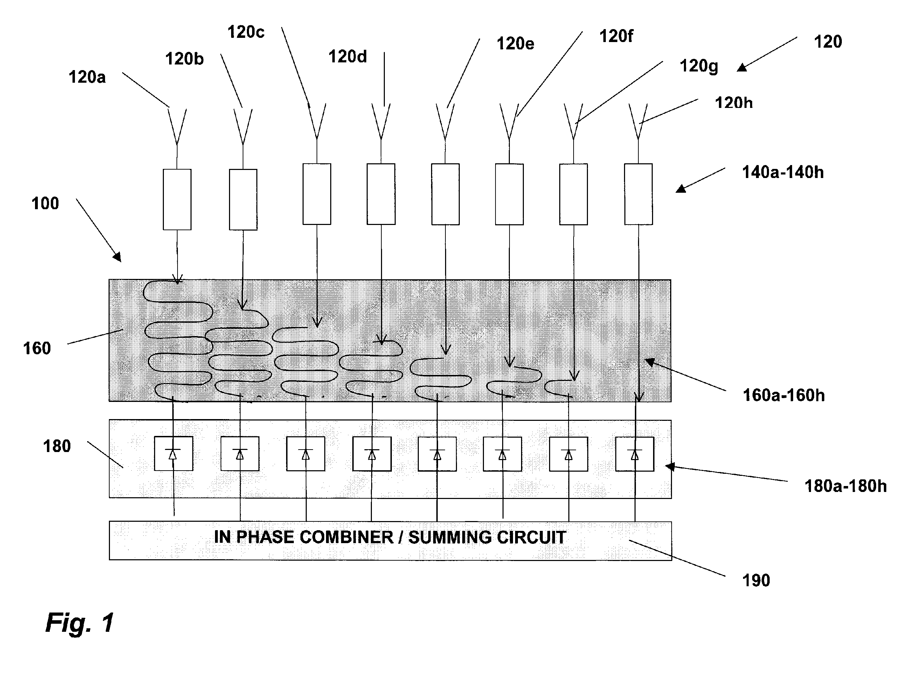

Figure 1 illustrates a basic receiver arrangement 100 in accordance with the present invention. The arrangement 100 comprises an antenna array 120, a bank 140 of optical modulators, a beam forming module 160, a photodiode array 180 and a summing circuit 190. The antenna array 120 comprises eight antenna elements 120a - 120h as shown providing eight input channels to the receiver arrangement 100. Although eight antenna elements are shown, it will readily be understood that the antenna array 120 may comprise any suitable number of antenna elements, and hence input channels, according to the requirements of the particular application.

The bank 140 of optical modulators comprises eight modulating elements 140a - 140h which are connected to respective ones of the antenna elements 120a - 120h. (The modulating elements have not been referenced individually for clarity, and it will be appreciated that one modulating element is required for each input channel. Each modulating element would require an RF amplifier (not shown) to boost the received signal level from each antenna element 120a - 120h. A modulator bias control unit (also not shown) would also be required to control the bias point of each of the modulating elements 140a - 140h.) Similarly, the beam forming module 160 comprises eight phase/time delay control elements 160a - 160h and the photodiode array 180 comprises eight photodiode elements 180a - 180h. As described above, each element 160a - 160h and photodiode element 180a - 180h is allocated to a respective one of the input channels.

The antenna array 120 is a phased antenna array that, in general, can be used to generate a plurality of beams. A particular pointing direction is obtained by maintaining a consistent phase difference between each element of the array. However, for ease of illustration and explanation, the effect of receiving one beam will be described. This phase difference can be obtained by causing a time delay by various means between the antenna elements 120a - 120h. RF signals received by the antenna elements 120a - 120h are converted to optical signals having the respective RF information impressed on them. This is achieved by eight laser elements (not shown), each laser element being associated with a respective one of the antenna elements and the associated modulating element 140a -140h. The optical signals are then passed to the beam forming module 160 where each element 160a - 160h introduces phase/time delay to form a beam in the required direction. The photodiode elements 180a - 180h converts the optical signals into electrical signals and these signals are then input into the summing circuit 190 to provide a summed beam output signal (not shown).

The combination of the photodiode array 180 and the summing circuit 190 can be considered to be a MIR device that takes the optical signals carrying the RF information in each channel and combines them into a single RF output channel. This single RF output channel corresponds to the total signal received by the antenna array 120 from a particular beam direction. Thus, the MIR converts the optical signals into RF signals in each of the channels while maintaining the RF phase and intensity.

The summing circuit 190 may be implemented by linking the photodiode elements 180a - 180h of the photodiode array 180 to a microwave transmission line, for example a coplanar waveguide, (not shown) in such a way that the RF information contained in each optical channel is combined efficiently onto the microwave waveguide.

However, for efficient transfer of RF information from a plurality of channels into a single RF output channel, several requirements have to met:

The impedance of the RF waveguide has to be matched to the photodiode array 180.

The capacitance of each photodiode element 180a - 180h has to be kept as low as possible otherwise the capacitance will tend to short out the RF information.

There are also three further practical requirements have to be to achieved:
a) that each photodiode element in the MIR has to have a similar characteristic;
b) that each photodiode element has to have a high responsivity; and
c) that the process has to cost effective.

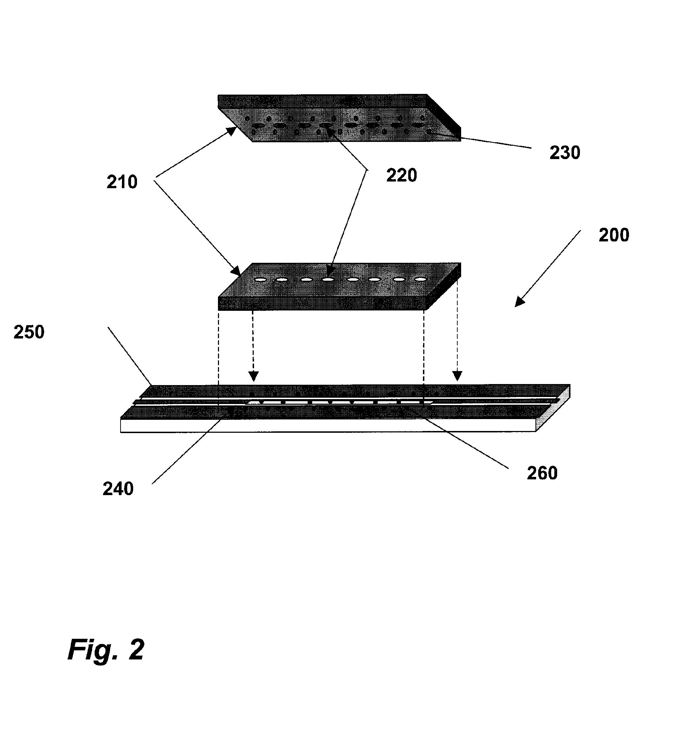

In the simplest embodiment of the present invention, the photodiode array 180 is fabricated independently of the microwave waveguide. When this is done, the photodiode array can look like that referenced as 210 in Figure 2. This division of functionality has several advantages:
i. standard commercially available photodiode elements can be used in the photodiode array; and
ii. planar RF waveguide designs can be made relatively cheaply batches and can be adapted in an iterative way to match the impedance match the photodiode array.

Thus, a batch of low capacitance, high responsivity photodiode elements can be manufactured and various methods of linking the photodiode elements to a microwave waveguide can be used to obtain the impedance match described above. In order to meet these requirements, each photodiode element has to be linked by low inductance electrical connections to the waveguide. This means that the waveguide has to be of the planar type.

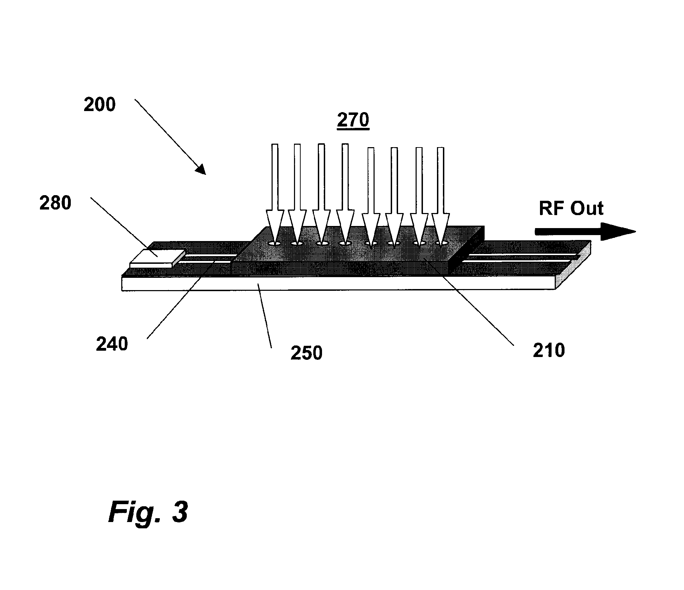

One method of obtaining the required low inductance bonds described above is to "flip chip" the photodiode array onto solder bumps manufactured on the waveguide. Such a photodiode array arrangement 200 is shown in Figures 2 and 3.

Referring initially to Figure 2, an exploded view of the elements of the photodiode array and RF summing circuit arrangement (or MIR) 200 is shown. The arrangement 200 comprises a photodiode array 210 having eight photodiode (or photosensitive) elements 220. The undersurface of the photodiode array 210 also has a plurality of electrical contacts 230 formed thereon as shown. The photodiode array 210 is mounted on a coplanar transmission line 240 that forms the RF summing circuit. The transmission line 240 is formed on a substrate 250 as shown. The substrate 250 includes a plurality of solder bumps 260 which make contact with the electrical contacts 230 formed on the undersurface of the photodiode array 210 when the photodiode array is assembled as shown in Figure 3.

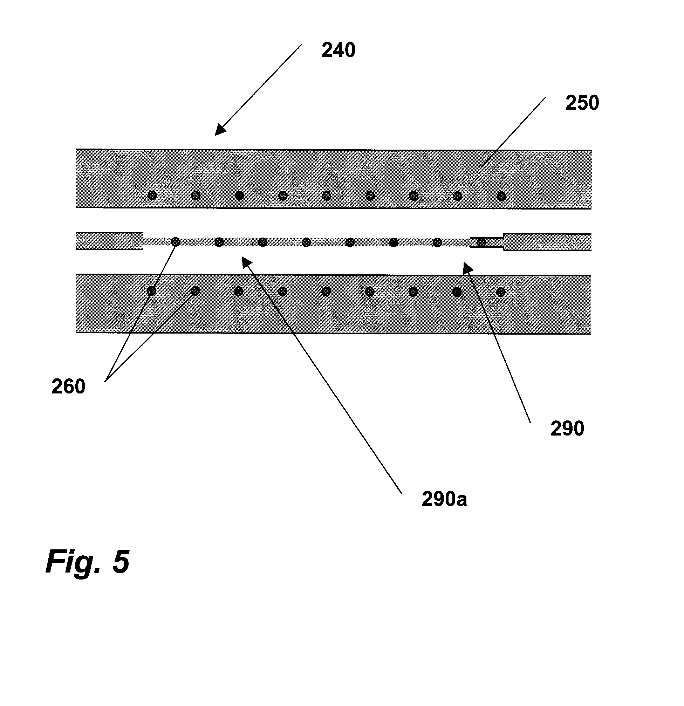

Impedance matching in the photodiode array arrangement 200 can be achieved by adjusting the width of the coplanar central line and the gap between the central line and the ground planes 290 (Figure 5) in the area where the photodiode array 210 covers the coplanar transmission line. In this way, the coplanar transmission line 240 can compensate for the presence of the photodiode array 210 over the transmission line 240 and the effect of the photodiode capacitance. This is shown more clearly in Figure 5.

In Figure 5, the coplanar transmission line 240 in the region of the photodiode array 210 is shown in more detail. The transmission line 240 has a different width and ground plane gap spacing in the area in which the photodiode array 210 is mounted as referenced by 290.

There are significant production advantages to using bump-bonding technology since it is a planar technology and therefore lends itself to volume manufacture. Bump-bonding technology has a high spatial resolution thus is well suited to keeping parts of the circuit small thereby keeping stray capacitance low.

The height of the photodiode array 210 above the coplanar transmission line 240 may also be used to achieve impedance match by changing the height of the solder bump 260. Better control of the bump height can be attained by having a part of the bump that does not melt during the bump-bonding process.

In Figure 3, the assembled photodiode array arrangement (or MIR) 200 is illuminated from the "back" i.e. from the opposite side to the electrical contacts, as indicated by arrows 270. Both sides of the photodiode array 210, 220 are finished prior to assembly. This has the advantage that the illumination side of the arrangement 200 is free of optical restrictions such as contacts, RF circuits. Furthermore, an anti-reflection (AR) coating (not shown) can also be applied to the illumination side of the photodiode array 210. An AR coating is required because the material from which the photodiode elements are typically made has a refractive index of about 3.5 and the percentage of reflected light is above 30% if no AR coating is applied.

An impedance-matched load 280 is mounted on the coplanar transmission line 240 at the end remote from the RF output as shown so as to terminate the line and reduce reflections.

It has been found that it is beneficial to trim the phase/time delay of each of the optical channels incident on the photodiode elements to compensate for the different propagation times along the coplanar transmission line 240, so that the combined RF signal is preferentially launched along one direction of the waveguide. This maximises the combining efficiency of the MIR.

An alternative to the arrangement shown in Figures 2 and 3 is to have the photodiode array 210 and RF combining circuit (coplanar transmission line) 240 combined on the front side of a single wafer. In this case, it will be essential to know the properties of the photodiode elements, for example, photodiode capacitance and how this is likely to change with the light intensity.

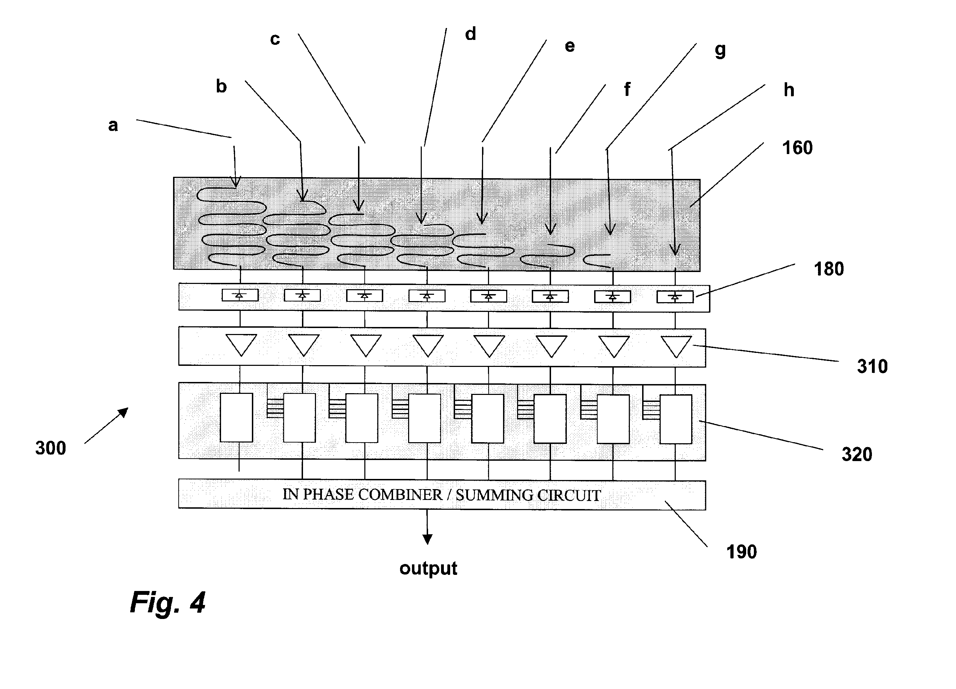

There are significant cost advantages to manufacturing an integrated design - particularly a monolithic arrangement if it can be optimised. Further, if other functions can also be incorporated, then important design constraints can be removed. Such a monolithic arrangement 300 is shown in Figure 4.

Figure 4 is similar to Figure 1 in that it illustrates the beam forming module 160, the photodiode array 180 and the summing circuit 190. Again, there are eight channels as indicated by a - h. In addition, an amplifier module 310 and a phase/time delay trimming module 320 are provided between the photodiode array 180 and the summing circuit 190. As before, both modules 310 and 320 include eight elements - one for each channel a - h. The presence of the amplifier module 310 reduces the requirement to match the impedance of the photodiode elements 180a - 180h (Figure 1) to the summing circuit 190. This is because the amplifiers can act as impedance transformers to step from the impedance of each photodiode element to the RF summing line. For example, a transimpedance amplifier can be used.

The monolithic or integrated arrangement is advantageous as the size can be smaller than the discrete design shown in Figures 2 and 3. Moreover, by having the gain so close to the photodiode elements means that the (wide band) amplifier is less prone to go into oscillation and there is less loss of signal before amplification is applied therefore the signal to noise is better maintained.

If control of the individual gain between amplifiers were available then some correction for the variation of intensity due to non-uniformity of the antenna/laser/modulator and photodiode would be possible.

As indicated above the phase/time delay of the RF signal is important when combining the signal from different channels since it is this which defines the pointing direction of the beam from the antenna array and how efficiently the RF combines. The RF combining could be implemented by a series of Wilkinson couplers before either being further amplified or going straight onto a planar waveguide combiner circuit.

If an amplifier can be integrated onto each photodiode, it is conceivable that an RF phase/time delay circuit 320 be included on each channel that is used to trim the relative phases.

These RF phase/time delay circuits 320 are usually lossy so it is probably necessary that an amplifier 310 (Figure 4) be added to each photodiode before the trimming circuit could be implemented so that signal-to-noise ratio can be maintained. This would have the following advantages:
- The phase and amplitude manufacturing tolerances of the antenna; optical modulator (and amplifier); optical delay lines; photodiode and amplifier are significantly relaxed.
- RF combining could be made more efficient and thereby improving signal-to-noise performance.

Whilst the optical wavelength is not critical, all components have to be comparable.

It will readily be understood that, although the invention has been described with reference to eight channels, any number of channels can be implemented according to the application in which the invention is to be implemented. In this case, there will be an element in each of the modules described above for each channel.

Whilst the present invention has been described with reference to a discrete component implementation as described with reference to Figures 1 to 3, and an integrated or monolithic implementation as described with reference to Figure 4, it will be appreciated that a hybrid implementation is also possible. In such a hybrid implementation, some of the components may be formed as an integrated element and some may be discrete.

## Claims

1. A multi-input receiver arrangement (200) comprising:-
a photodiode array (210) for receiving optical signals having RF information impressed thereon, the array including a plurality of photosensitive elements (220) and a plurality of electrical contacts (230); and
coherent summing means (240, 290) for summing the RF information to provide an RF output signal, the coherent summing means (240, 290) being such that the signal from each photosensitive element (220) adds vectorially in phase.

2. An arrangement according to claim 1, wherein the coherent summing means (240, 290) comprises a coplanar transmission line (240) formed on a substrate (250), the impedance of the coplanar transmission line (240) being matched to the photodiode array (210) by adjusting parameters of the coplanar transmission line (290).

3. An arrangement according to claim 2, wherein the substrate (250) of the coplanar transmission line (240) includes a plurality of solder bumps (260) that make contact with electrical contacts (230) of the photodiode array (210, 220, 230), the height of the solder bumps (260) being selected to control the impedance of the photosensitive elements (220).

4. An arrangement according to any one of the preceding claims, wherein the arrangement comprises discrete components.

5. An arrangement according to any one of the preceding claims, wherein the arrangement comprises hybrid components.

6. An arrangement according to any one of the preceding claims, wherein the arrangement comprises a single monolithic component.

7. An arrangement according to any one of the preceding claims, wherein the optical signals are analogue signals.

8. An RF circuit comprising:-
an antenna array for receiving RF signals;
conversion means for converting the received RF signals to optical signals having RF information impressed thereon; and
a receiver arrangement according to any one of the preceding claims.

9. A circuit according to claim 8, further comprising beam forming means for forming a plurality of beams from the optical signals.

10. A circuit according to claim 8 or 9, wherein the RF signals are analogue signals.
